# EUROPEAN PATENT SPECIFICATION

(11) **EP 3 693 265 B1**
(45) Date of publication and mention of the grant of the patent: **17.04.2024**
(21) Application number: 20155254.4
(22) Date of filing: 03.02.2020
(51) Int. Cl.: B63H 20/12, B62D 1/10, B63H 25/02

(54) **MOTORBOAT FLY-BY-WIRE STEERING WHEEL HUB**
FLY-BY-WIRE-LENKRADNABE FÜR MOTORBOOTE
MOYEU DE VOLANT DE VOL ÉLECTRIQUE DE BATEAU À MOTEUR

(30) Priority: 11.02.2019 SE 1950156
(43) Date of publication of application: 12.08.2020
(73) Proprietor: Rybeck Marin-Consult AB, 459 91 Ljungskile (SE)
(72) Inventor: RYBECK, Martin, 459 91 Ljungskile (SE)
(74) Representative: Fenix Legal KB

(56) References cited:
- DE-A1- 19 858 835
- DE-A1-102017 207 272
- KR-A- 20110 062 630
- US-A1- 2003 164 060
- US-A1- 2012 045 951
- US-A1- 2017 106 894
- US-B1- 10 196 122

## Description

### Field of the invention

This invention relates to a fly-by-wire steering wheel hub for control and information of operation of a motorboat, comprising a housing to be secured in the motorboat, a hollow shaft for a steering wheel rotationally supported by the housing, a control and information unit mounted radially inside the steering wheel, a rotational sensor mounted in the housing for sensing an angular position of the hollow shaft, and a nut supported slidingly and non-rotationally between axial end stops in the housing.

### Background of the invention

Navigating a motorboat at average and high speeds is occasionally a bumpy and shaking experience. It is then important that the operator has full control of particularly the motor functions. For safety reasons, it may be desirable that the operator can hold onto the steering wheel with both hands. To that end, it is also desirable that the controls of other functions than steering are close to the steering wheel, so that these functions can be controlled without the operator having to let go of the wheel.

Therefore, particularly in motorboats, it would be convenient to have both an information display and control switches accessible in a unit inside the wheel, whereby also the operator's thumbs may be used for controlling the motorboat when holding on to the wheel and reading the information on the display.

Prior art document US 2012/045951 A1 discloses a steering wheel for vessels. In the prior art, US 20030164060 A1 and JPH01148640A disclose stationary control units exposed internally of the wheel in an automobile. JP JPS58118455A and DE102017207272A disclose a stationary information display unit for an automobile.. These documents also have hollow central shafts that facilitate connection of signal and power cables to the unit inside the steering wheel.

It would also be convenient to have substantially all operator control and information components in a self-contained compact assembly that could easily be firmly secured for example to a dashboard in a boat.

It would further contribute to safety and convenience if the angular position of the steering wheel always corresponds to an angular position of a rudder / outboard motor / stern drive unit of the boat.

Prior art electric control steering systems for motorboats often has a freewheeling wheel that gives no operator feedback of rudder/motor/drive unit position.

### Disclosure of the invention

An object of this invention as claimed is to provide a motorboat fly-by wire steering wheel hub that meets the above demands on easy installation and safe operator control and feedback.

In an aspect of the invention the hollow shaft for the steering wheel is rotationally supported by the housing via radial bearings located in the bores, a control and information unit is mounted to the hollow shaft radially inside the steering wheel; a rotational sensor mounted in the housing for sensing an angular position of the hollow shaft; and wherein the rotational sensor is in mating rotational engagement with the hollow shaft. Thereby an actual input angle of the steering wheel can be made to repetitively always correspond to a certain output angle from a steering actuator.

The motorboat fly-by wire steering wheel hub further comprises a nut supported slidingly and non-rotationally between axial end stops defined by the bores and a top face of bearing in the housing; and a processing unit capable of communicating and processing input and output signals for the operation of the motorboat, and the nut is in threaded engagement with the hollow shaft.

It is thereby possible to have substantially all control functions for the operation of the boat unified in the hub. Thereby there is obtained a compact, easy to install, self-contained hub with improved safety, where both control and information capabilities are in easy reach for the operator inside the wheel, and where the operator will have a better feedback control over the steering function.

The hollow shaft has an internal hollow tube being rotationally supported by the hollow shaft and secured to the housing. This arrangement results in that the hollow tube will be kept stationary in the housing when the hollow shaft is rotated. Thereby the control and information unit is mounted to the hollow tube to be stationary inside the steering wheel instead of being rotated with the steering wheel.

The processing unit can be operatively connected to a cable bus system communicating with operational components of the motorboat through the hollow shaft. Thereby substantially all control functions may be communicated from the hub in a compact and straightforward manner.

Other features and advantages of the invention may be apparent from the detailed description and the annexed claims.

### Brief description of the drawing

FIG. 1 is a slanting side view of a steering wheel hub according to the invention mounted to a steering wheel in a motorboat dashboard;
FIG. 2 is a side view, partly in section, of the hub shown in FIG.1;
FIG. 3 is a side view, partly in section, showing components in a housing of the hub according to the invention;
FIG. 4 is a slanting side view, partly in section, of the hub housing shown in FIG. 3.
FIGS. 5 and 6 are views corresponding to respective FIGS. 4 and 5, and showing a modified hub according to the invention;
FIG. 7 is a broken away slanting side view, partly in section, showing a slightly modified hub according to the invention; and
FIG. 8 is an exploded side view of a wheel hub according to the invention, diagrammatically showing an example of connecting the hub to operational components in a motorboat; and

The figures may be partially simplified to show principles of the invention, and components in the figures having mutually similar functions may be designated by same reference numerals.

### Detailed description of embodiments

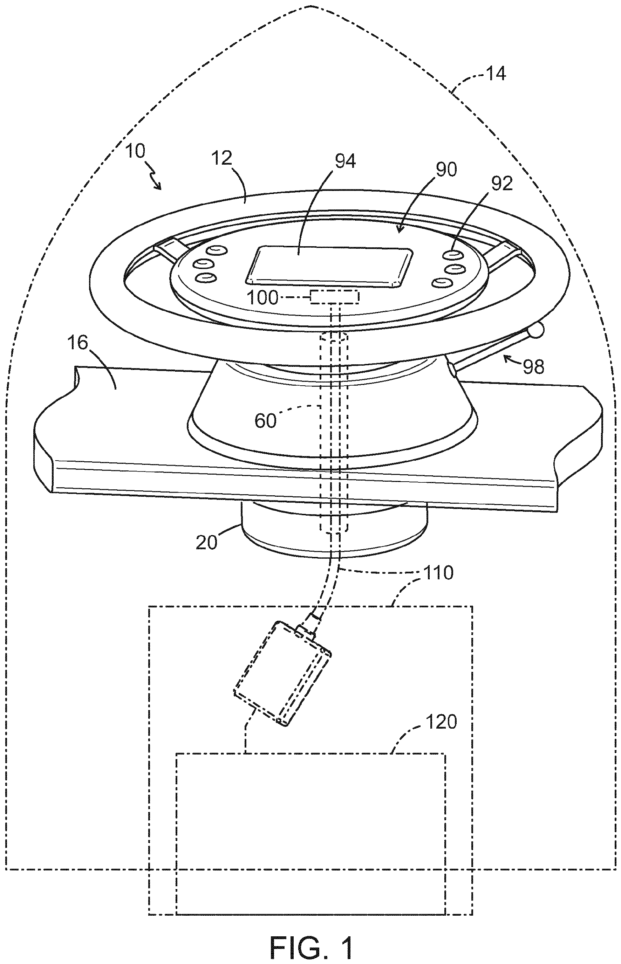

The hub 10 is shown in FIG. 1 including a steering wheel 12 and attached to a dashboard 16 in a diagrammatically illustrated motorboat 14. Hub 10 is of the fly-by-wire type adapted to electronically control a set of motorboat functions 120 including a steering function via a cable bus signal system 110 such as a CAN (Controller Area Network) bus system that is well known in the art.

In this embodiment hub 10 has a housing 20 and a control and information unit 90 mounted to a hollow tube 60 above and radially spaced inside a rim of the steering wheel 12. The radial spacing is to allow an operator's thumbs to grip the wheel 12.

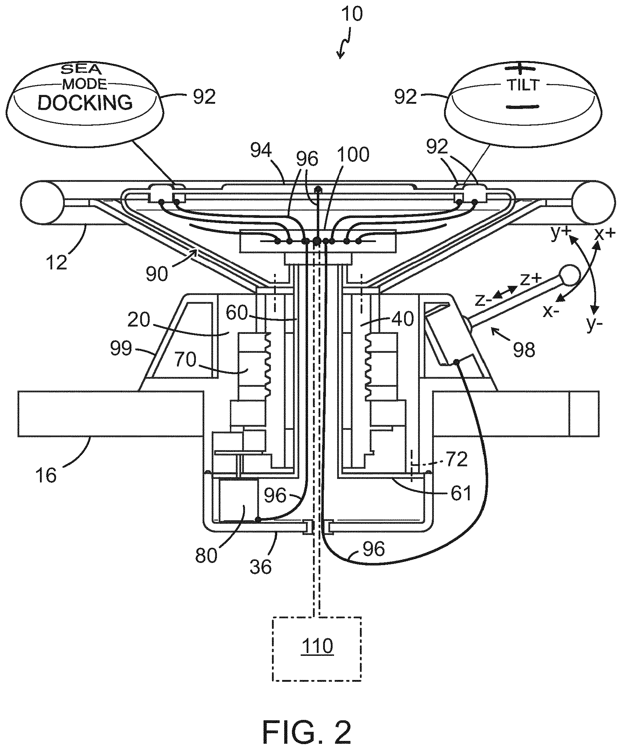

As is also apparent from FIG. 2, control and information unit 90 has a number of controls 92, such as switches of any suitable type, as well as a display 94. Cables 96 operatively connect controls 92 and display 94 to the cable bus system 110 via a processing unit / computer 100.

Cables 96 also operatively connect a rotational sensor 80, yet to be described, and a joystick switch 98 to the cable bus system 110 via the computer 100.

In the example shown in FIG. 2, the joystick switch 98 is mounted to the housing 20 via a frustoconical cover 99 that may be received by an upper cylindrical external surface of the housing 20. Joystick switch 98 may be operated by an operator's finger in at least x and y directions and may also have different modes selected by one of the switches 92 that is operated by an operator's thumb. For example, in a docking mode, the joystick switch 98 may be operated to simultaneously control both a bow thruster (y directions) and an outboard motor (x directions) of the boat, whereas in a driving/sea mode the joystick switch may control different functions of only the outboard motor.

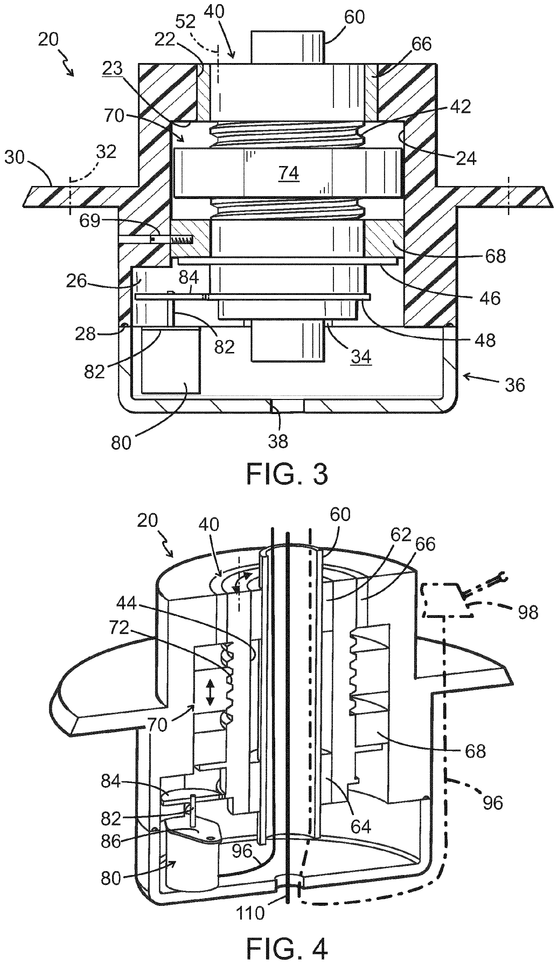

The internal components of the housing 20 are shown in FIGS. 3-6. Housing 20 comprises a massive cylindrical hollow piece of material that may be a suitable plastics material.

In the embodiments shown, housing 20 has a narrower top bore 22 and a wider bottom bore 24 defining therebetween an annular face 23. The housing 20 has also an external radial flange 30 for securely attaching it to a top face of the dashboard 16 via screw joints 32.

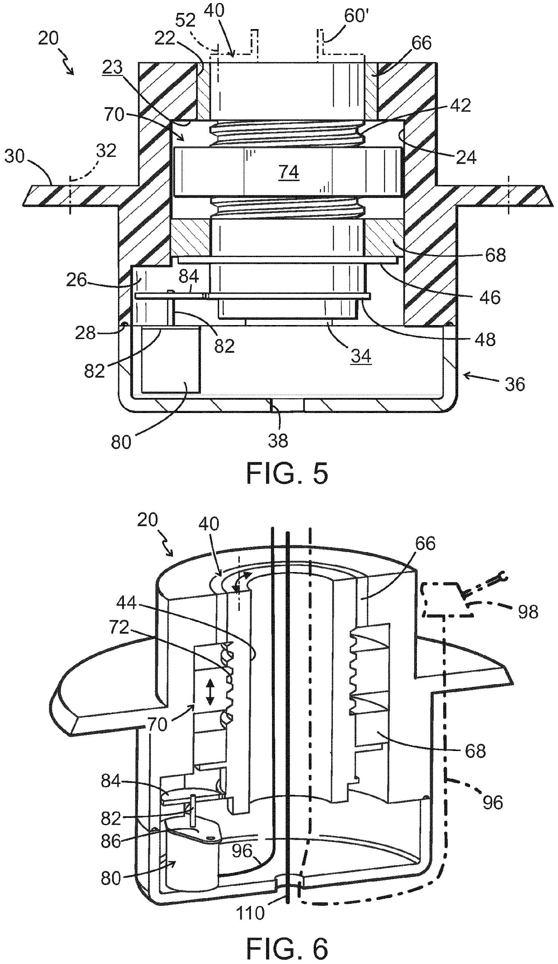

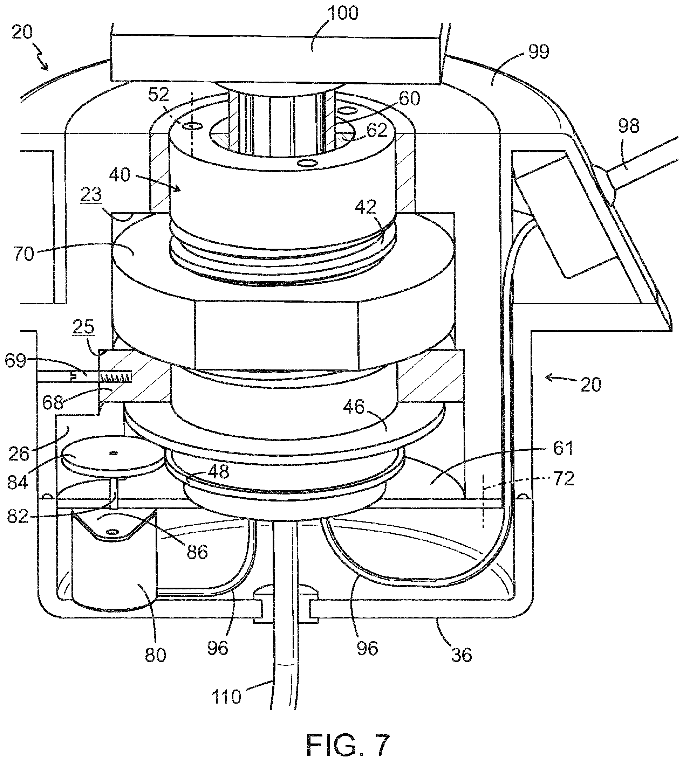

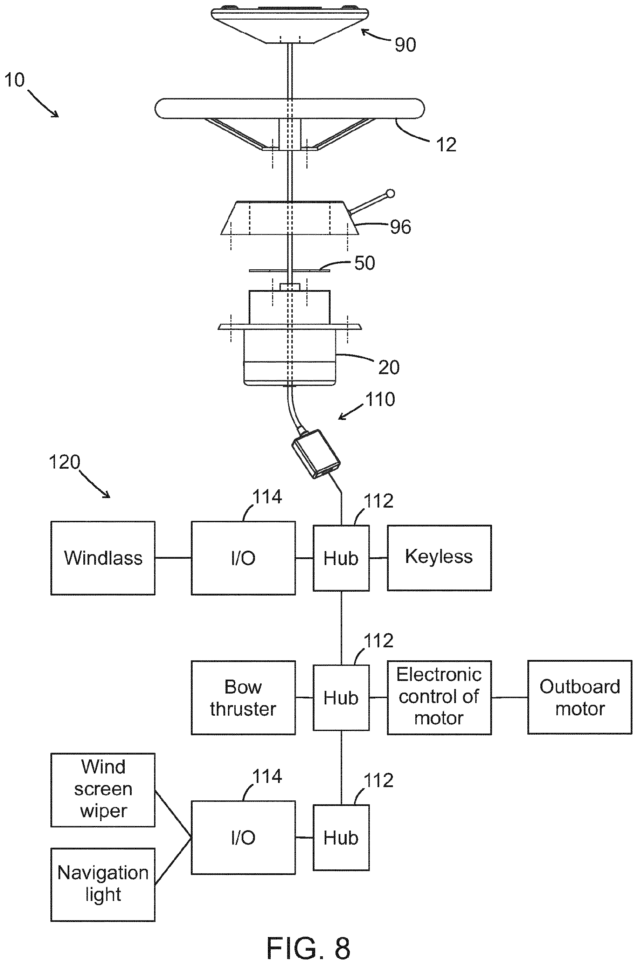

In the bores 22, 24 there is inserted a hollow shaft 40 that is rotationally supported by the housing 20 via radial bearings 66 and 68 located in the respective bores 22, 24. Bearings 66, 68 may be secured to the housing 20 by any suitable means such as radially extending pins or screws 69 (FIGS. 3, 7). Bearings may also be axially supported by an annular face, such as face 25 for bearing 66 (FIG. 5). Bearing 68 also serves as an axial bearing for a radial flange 46 that may be welded to the hollow shaft 40 and defines a top end position of the hollow shaft 40. The hollow shaft 40 is arrested in this position by mounting the wheel 12 for example by screw joints 52 on top of the hollow shaft 40. A washer 50 (FIG. 8), for example of low friction material, may be inserted therebetween to facilitate rotation of the resulting wheel and hub assembly in relation to the stationary housing 20.

Hollow shaft 40 has a helically threaded axial portion 42 that is in threaded engagement with a nut 70 having mating threads 72. Nut 70 is slidingly supported by the housing 20 between axial end stops defined by the above mentioned annular face 23 and a top face of bearing 68. While also other arrangements may be suitable, nut 70 is further non-rotationally supported by mating planar respective faces 34 and 74 in the housing 20 and on the nut 70. Thereby the angular stroke of the hollow shaft 40 will be confined, for example, to a few revolutions, such as ±1.5 revolutions from a center position. The threads may have a suitably dimensioned trapezoidal thread form to be capable of bearing the expected load.

Hollow shaft 40 has further a toothed radial flange 48 in gear engagement with a toothed wheel 84 mounted to a shaft 82 of the above mentioned rotational sensor 80. Sensor 80 is partially contained in a recess 26 at a bottom end of the housing 20 and may in the FIGs 5, 6 embodiment be attached to the hub 20 via an attachment plate, for example by screws (not shown) . In the embodiments shown, sensor 80 is of the potentiometer type capable of sensing the actual or absolute angular stroke of the hollow shaft 40 from, for example, the above mentioned center position. Such potentiometer sensor 80 is capable of always sensing and signaling the angular position of the wheel; for example, if the electric power supplied to the components involved is turned off, and the angular position of the steering wheel 12 is changed before the power is turned on again, an outboard motor controlled by the steering wheel 12 will change its angular positon accordingly when the power is turned on again.

As apparent from FIG. 4, the hollow shaft 40 may internally support the above-mentioned hollow tube 60 via radial bearings 62, 64. While the hollow tube 60 may be rotatable together with the hollow shaft 40, resulting in that the control and information unit 90 attached thereto will rotate together with the steering wheel 12, in the embodiments shown the hollow tube 60 is stationary and attached to the housing 20, for example by having a radial flange 61 (FIGS. 2, 7) that is secured to the housing 20 by a number of screw joints 72. In this case the rotational sensor 80 can be secured to flange 61 via an attachment plate 86.

As apparent from FIGS. 5 and 6, the hollow shaft 40 may alternatively be devoid of the hollow tube 60. In this simplified arrangement, the control and information unit 90 can be mounted to the hollow shaft 40 via the steering wheel 12 to rotate together with the steering wheel 12. Optionally, the control and information unit 90 may then be mounted centrally to a flanged hollow extension piece 60', shown in phantom in FIG. 5, which more or less replaces the top end of the hollow tube 60 in the previously described embodiments.

The housing 20 has also a bottom cover 36. Bottom cover 36 has a bottom aperture for receiving a section of the cable bus 110 that is extends through the hollow shaft 60 and is connected to the processing unit 100. Cover 36 can be secured to housing 20 in any suitable manner and may also be sealed to the housing 20 by an O-ring inserted in an annular recess 26 at a bottom end of the housing 20.

FIG. 8 diagrammatically shows an example of components 120 in a motorboat that may typically be connected to the cable bus system 110. As shown, cable bus system 110, in a well-known manner, has serially connectable bus hubs 112 to which different functional components may be connected. In case the components are not directly digitally controllable, such as a wind screen wiper, input/output components 114 having converter circuitry for transforming digital signals to analog signals and vice versa are connected between a bus hub 112 and a respective component.

## Claims

1. A motorboat fly-by-wire steering wheel hub (10) for control and information of operation of a motorboat, **characterized by** comprising:
a housing (20) having bores (22, 24) and configured to be secured in the motorboat;
a hollow shaft (40) for a steering wheel (12) rotationally supported by the housing (20) via radial bearings (66,68) located in the bores (22,24);
a rotational sensor (80) mounted in the housing (20) for sensing an angular position of the hollow shaft (40) wherein the rotational sensor (80) is in mating rotational engagement with the hollow shaft (40);
a nut (70) supported slidingly and non-rotationally between axial end stops defined by the bores (22,24) and a top face of bearing (68) in the housing (20); and
wherein a control and information unit (90) is mounted to the hollow shaft (40) radially inside the steering wheel (12) and comprising a processing unit (100) capable of communicating and processing input and output signals for the operation of the motorboat and
the nut (70) is in threaded engagement with the hollow shaft (40).

2. The hub of claim 1, wherein the hollow shaft (40) has an internal hollow tube (60) being rotationally supported by the hollow shaft and secured to the housing (20).

3. The hub of claim 3 wherein the processing unit (100) is operatively connected to a cable bus system (110) communicating with operational components of the motorboat through the hollow shaft (40).

4. The hub according to any of the preceding claims, wherein the rotational sensor (80) is operatively connected to the processing unit (100) through the hollow shaft (40).

5. The hub according to any of the preceding claims, comprising a joystick switch (98) mounted to the housing (20) and operatively connected to the processing unit (100) through the hollow shaft (40).

6. The hub according to any of the preceding claims, comprising switches (92) on the control and information unit (90) and operatively connected to the processing unit (100) therein.

7. The hub according to any of the preceding claims, comprising a display (94) on the control and information unit (90) and operatively connected to the processing unit (100) therein.

## Patentansprüche

1. Eine Fly-by-Wire-Lenkradnabe (10) für Motorboote zur Steuerung und Information des Betriebs eines Motorboots, **dadurch gekennzeichnet, dass** sie Folgendes umfasst:
ein Gehäuse (20), das Bohrungen (22, 24) aufweist und zur Befestigung im Motorboot konfiguriert ist;
eine Hohlwelle (40) für ein Lenkrad (12), die durch das Gehäuse (20) über Radiallager (66,68), die sich in den Bohrungen (22, 24) befinden, drehbar gelagert ist,
einen Drehsensor (80), der im Gehäuse (20) montiert ist, um eine Winkelposition der Hohlwelle (40) zu erfassen, wobei der Drehsensor (80) in passendem Dreheingriff mit der Hohlwelle (40) steht;
eine Mutter (70), die zwischen axialen Endanschlägen, die durch die Bohrungen (22, 24) definiert sind, und einer Oberseite des Lagers (68) im Gehäuse (20) gleitend und nicht drehbar gelagert ist, und
wobei eine Steuer- und Informationseinheit (90) an der Hohlwelle (40) radial innerhalb des Lenkrads (12) montiert ist und eine Verarbeitungseinheit (100) umfasst, die in der Lage ist, Eingangs- und Ausgangssignale für den Betrieb des Motorboots zu kommunizieren und zu verarbeiten die Mutter (70) steht in Gewindeeingriff mit der Hohlwelle (40).

2. Nabe nach Anspruch 1, wobei die Hohlwelle (40) ein inneres Hohlrohr (60) aufweist, das von der Hohlwelle drehbar getragen und am Gehäuse (20) befestigt wird.

3. Nabe nach Anspruch 3, wobei die Verarbeitungseinheit (100) operativ mit einem Kabelbussystem (110) verbunden ist, das über die Hohlwelle (40) mit Betriebskomponenten des Motorboots kommuniziert.

4. Nabe nach einem der vorhergehenden Ansprüche, wobei der Rotationssensor (80) über die Hohlwelle (40) mit der Verarbeitungseinheit (100) wirkverbundenist.

5. Die Nabe nach einem der vorhergehenden Ansprüche, umfassend einen Joystick-Schalter (98), der am Gehäuse (20) montiert und über die Hohlwelle (40) operativ mit der Verarbeitungseinheit (100) verbunden ist.

6. Die Nabe nach einem der vorhergehenden Ansprüche, umfassend Schalter (92) an der Steuer- und Informationseinheit (90) und operativ mit der darin befindlichen Verarbeitungseinheit (100) verbunden.

7. Die Nabe nach einem der vorhergehenden Ansprüche,umfassend ein Display (94) auf der Steuer- und Informationseinheit (90) und operativ mit der darin befindlichen Verarbeitungseinheit (100) verbunden.

## Revendications

1. Moyeu de volant électrique (10) pour bateau à moteur pour la commande et l'information du fonctionnement d'un bateau à moteur, **caractérisé en ce qu'**il comprend:
un boîtier (20) comportant des alésages (22, 24) et configuré pour être fixé dans le bateau à moteur,
un arbre creux (40) pour un volant (12) supporté en rotation par le boîtier (20) via des roulements radiaux (66, 68) situés dans les alésages (22, 24);
un capteur de rotation (80) monté dans le boîtier (20) pour détecter une position angulaire de l'arbre creux (40), le capteur de rotation (80) étant en prise rotative conjuguée avec l'arbre creux (40);
un écrou (70) supporté de manière coulissante et non rotative entre des butées d'extrémité axiales définies par les alésages (22, 24) et une face supérieure du roulement (68) dans le boîtier (20); et
dans lequel une unité de commande et d'information (90) est montée sur l'arbre creux (40) radialement à l'intérieur du volant (12) et comprend une unité de traitement (100) capable de communiquer et de traiter des signaux d'entrée et de sortie pour le fonctionnement du bateau à moteur et l'écrou (70) est en prise filetée avec l'arbre creux (40).

2. Moyeu selon la revendication 1, dans lequel l'arbre creux (40) comporte un tube creux interne (60) supporté en rotation par l'arbre creux et fixé au boîtier (20).

3. Moyeu selon la revendication 3, dans lequel l'unité de traitement (100) est fonctionnellement connectée à un système de bus de câbles (110) communiquant avec les composants opérationnels du bateau à moteur par l'intermédiaire de l'arbre creux (40).

4. Moyeu selon l'une quelconque des revendications précédentes, dans lequel le capteur de rotation (80) est connecté de manière fonctionnelle à l'unité de traitement (100) par l'intermédiaire de l'arbre creux (40).

5. Moyeu selon l'une quelconque des revendications précédentes, comprenant un commutateur à manette (98) monté sur le boîtier (20) et connecté fonctionnellement à l'unité de traitement (100) par l'intermédiaire de l'arbre creux (40).

6. Moyeu selon l'une quelconque des revendications précédentes, comprenant des commutateurs (92) sur l'unité de commande et d'information (90) et connectés fonctionnellement à l'unité de traitement (100) à l'intérieur de celle-ci.

7. Moyeu selon l'une quelconque des revendications précédentes, comprenant un affichage (94) sur l'unité de commande et d'information (90) et connecté fonctionnellement à l'unité de traitement (100) à l'intérieur de celle-ci.
